# FASCICULE DE BREVET EUROPEEN

(11) **EP 3 884 656 B1**
(45) Date de publication et mention de la délivrance du brevet: **28.12.2022**
(21) Numéro de dépôt: 19802208.9
(22) Date de dépôt: 20.11.2019
(51) Int. Cl.: H04N 5/225, H04N 5/232, H04N 5/235, H04N 5/33

(54) **APPAREIL ET PROCÉDÉ POUR OBSERVER UNE SCÈNE COMPORTANT UNE CIBLE**
VORRICHTUNG UND VERFAHREN ZUR BEOBACHTUNG EINER SZENE MIT EINEM ZIEL
DEVICE AND METHOD FOR OBSERVING A SCENE COMPRISING A TARGET

(30) Priorité: 20.11.2018 FR 1871619
(43) Date de publication de la demande: 29.09.2021
(73) Titulaire: Safran Electronics & Defense, 75015 Paris (FR)
(72) Inventeur: ROUX, Nicolas, 77550 MOISSY-CRAMAYEL (FR); LERAT, Brice, 77550 MOISSY-CRAMAYEL (FR); BERTHIER, Héloise, 550 MOISSY-CRAMAYEL (FR)
(74) Mandataire: Lavialle, Bruno François Stéphane
(86) Numéro de dépôt international: PCT/EP2019/081893
(87) Numéro de publication internationale: WO 2020/104509

(56) Documents cités:
- EP-A1- 1 978 740
- WO-A1-2017/012899
- US-A1- 2017 219 693
- US-A1- 2018 091 746

## Description

La présente invention concerne le domaine de l'imagerie et de la capture d'image. L'invention concerne plus particulièrement un appareil et un procédé pour observer une scène comportant une cible réfléchissant un faisceau laser et visualiser sur des images de la scène la tache formée par le faisceau laser sur la cible.

### ARRIERE-PLAN TECHNOLOGIQUE

De nos jours, dans la plupart des appareils d'observation se trouve un dispositif de capture d'image comprenant un capteur optronique ayant un champ déterminant une scène observée. Le capteur optronique, le plus souvent de type CMOS ou CCD, comporte des éléments sensibles qui sont disposés de façon contiguë pour former une matrice et qui sont agencés pour collecter la lumière réfléchie ou émise par une portion de la scène présente dans le champ de chaque élément sensible (les éléments sensibles sont plus couramment appelés « pixels », abréviation de la désignation anglaise « picture element »). Les photons du flux lumineux reçus par chaque élément sensible provoque la création de charges électriques dans l'élément sensible qui s'accumulent dans l'élément sensible pendant un temps dit d'intégration avant d'être collectées sous la forme d'un signal électrique représentatif de ce flux lumineux. Le temps d'intégration, qui est le même pour tous les éléments sensibles, dépend de la luminosité de la scène comme le temps d'exposition en photographie classique : plus la luminosité de la scène est faible et plus le temps d'intégration choisi est long.

Dans certaines applications, il est nécessaire de pouvoir visualiser une scène et une tâche lumineuse résultat de la réflexion d'un faisceau laser sur une cible se trouvant dans la scène. Dans une scène très lumineuse comme une scène ensoleillée, tous les détails de la scène apparaissent et il est difficile de distinguer la tâche laser parmi ceux-ci. Dans une scène peu lumineuse comme sous un ciel nuageux, à la tombée du jour ou de nuit, il devient difficile d'obtenir une image montrant clairement la tâche lumineuse et des détails de la scène sans recourir à des dispositifs complémentaires d'amplification comme une photodiode. Ces dispositifs ont cependant l'inconvénient de créer des artefacts, comme du blooming, sous certaines conditions, voire de détériorer le capteur en le soumettant à un excès de flux lumineux.

Il a été imaginé de recourir à un appareil d'observation comprenant un premier dispositif de capture d'image pour reproduire sur un premier afficheur la scène, un émetteur laser pour émettre un faisceau laser vers une cible se trouvant dans la scène et former une tache lumineuse sur cette cible, et un deuxième dispositif de capture d'image pour reproduire sur un deuxième afficheur cette tache, le premier dispositif de capture et le deuxième dispositif de capture ayant des champs se superposant l'un sur l'autre. Le temps d'intégration pour le premier dispositif de capture d'image est choisi pour faire ressortir les détails de la scène et le temps d'intégration pour le deuxième dispositif de capture d'image est choisi pour avoir une tache de diamètre raisonnable. Les images produites par le premier dispositif de capture d'image sont affichées sur le premier afficheur et les images produites par le deuxième dispositif de capture d'image sont affichées sur le deuxième afficheur. Cet affichage sur deux afficheurs est cependant peu pratique.

US-A-2017/219693 décrit un système de détection utilisant un laser, ce système comprenant un filtre optique mobile centré sur la longueur d'onde du laser, et permettant d'obtenir une image de la scène ou une image de la tache lumineuse, les deux images étant combinées en une seule image.

### OBJET DE L'INVENTION

Un but de l'invention est de permettre l'affichage dans une même image de la tache et des détails de la scène et ce sous pour une plage d'éclairement relativement étendue.

### BREF EXPOSE DE L'INVENTION

A cet effet, on prévoit, selon l'invention un appareil d'observation et de désignation, comprenant un premier capteur d'image et un deuxième capteur d'image qui sont reliés à un circuit électronique de traitement d'image relié à un afficheur, le premier capteur d'image et le deuxième capteur d'image étant agencés pour avoir des champs se superposant pour fournir respectivement au moins une première image et une deuxième image d'une même scène et l'appareil comprenant un émetteur laser pour émettre dans une zone prédéterminée du champ du deuxième capteur un faisceau laser dans une plage prédéterminée de longueurs d'onde. Un filtre à régions d'intérêt s'étend devant le deuxième capteur, le filtre à régions d'intérêt comprenant une première région correspondant à la zone prédéterminée du champ, une deuxième région ceinturant la première région et une troisième région entourant la deuxième région, le filtre étant agencé pour assurer, dans la deuxième région, un blocage sensiblement total du flux lumineux provenant de la scène et, dans la première région, une atténuation du flux lumineux hors de la plage prédéterminée de longueurs d'ondes et, dans la troisième région, une transmission maximale du flux lumineux. Le circuit électronique de traitement est agencé pour superposer les deux images en utilisant la zone de la deuxième image correspondant à la troisième région du filtre pour caler spatialement la deuxième image par rapport à la première image.

La première région assure un filtrage spectral pour atténuer voire éliminer la contribution du flux solaire diurne dans l'éclairement du capteur en regard de cette région : la contribution du faisceau laser devient alors majoritaire dans la zone du deuxième capteur en regard de la première région, ce qui autorise une bonne visualisation de la tache lumineuse formée par le faisceau laser sur la cible. La troisième région autorise la collecte d'un maximum de flux lumineux par la zone du deuxième capteur en regard de la troisième région : ceci permettra d'avoir un maximum de détails dans la zone correspondante de la deuxième image. La deuxième région empêche que des rayons inclinés provenant de la partie du champ couverte par la troisième région du filtre ne viennent frapper la zone du deuxième capteur en regard de la première région et donc polluer la visualisation de la tache lumineuse dans la zone correspondante de la deuxième image. Ainsi, il est possible d'obtenir une deuxième image permettant la visualisation à la fois de la tache lumineuse et de détails de la scène. Cependant, cette image ne permet pas de visualiser les portions de la cible au voisinage immédiat de la tache lumineuse. Les détails visibles dans la deuxième image permettent de superposer les deux images en calant précisément les deux images l'une par rapport à l'autre de manière à obtenir une image mixte dans laquelle la tache lumineuse (visible sur la deuxième image) est positionnée sur la première image avec tous ses détails, y compris ceux de la cible.

L'invention a également pour objet un procédé d'observation d'une scène et de désignation d'une cible présente dans la scène, comprenant les étapes suivantes :
- projeter sur la cible un faisceau laser dans une plage prédéterminée de longueurs d'onde pour former une tache lumineuse sur la cible ;
- capturer un flux lumineux provenant de la scène avec un premier capteur d'image pour former une première image ;
- capturer le flux lumineux avec un deuxième capteur d'image en filtrant le flux lumineux pour former une deuxième image de la scène, le filtrage étant assuré en définissant une première région de filtrage contenant la tache lumineuse, une deuxième région de filtrage ceinturant la première région et une troisième région de filtrage entourant la deuxième région, le filtrage étant réalisé pour assurer, dans la deuxième région, un blocage sensiblement total du flux lumineux provenant de la scène et, dans la première région, une atténuation du flux lumineux hors de la plage prédéterminée de longueurs d'ondes et, dans la troisième région, une transmission maximale du flux lumineux ;
- superposer les deux images en utilisant la zone de la deuxième image correspondant à la troisième région pour caler spatialement la deuxième image par rapport à la première image pour ne former qu'une seule image.

De préférence, le faisceau laser a une longueur d'onde théorique prédéterminée et le filtre a dans la première région une bande passante de 10 nm centrée sur la longueur d'onde théorique prédéterminée.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
[Fig. 1] la figure 1 est une vue schématique en perspective d'un appareil selon l'invention ;
[Fig. 2] la figure 2 est une vue schématique de face d'un filtre utilisé dans l'appareil.

### DESCRIPTION DETAILLEE DE L'INVENTION

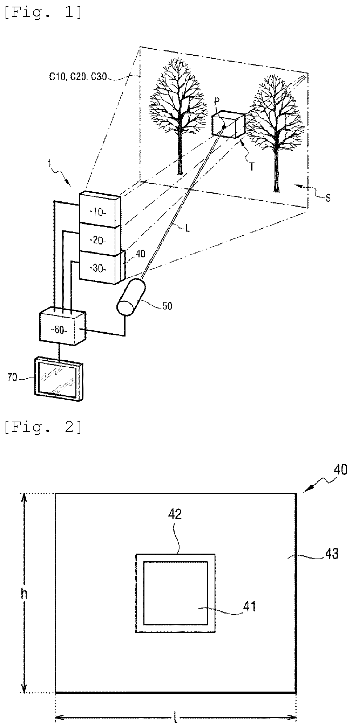

En référence à la figure 1, l'appareil d'observation et de désignation selon l'invention est destiné à la visualisation d'une scène S dans laquelle se trouve une cible T sur laquelle apparait une tache lumineuse P formée par la réflexion au moins partielle d'un faisceau laser L.

A cette fin, l'appareil d'observation et de désignation selon l'invention, généralement désigné en 1, comprend :
- deux premiers capteurs d'image, à savoir un capteur 10 agencé pour l'observation diurne de la scène S et un capteur 20 agencé pour l'observation nocturne de la scène S, les capteurs 10 et 20 ayant des champs C10 et C20 identiques ;
- un deuxième capteur d'image, à savoir un capteur 30 qui est plus particulièrement agencé pour l'observation de la tache lumineuse P et qui possède un champ C30 ;
- un émetteur laser 50 pour émettre un faisceau laser L vers une zone prédéterminée, ici centrale, du champ C30 du capteur 30 ;
- un circuit électronique de traitement d'image 60 relié à un afficheur 70 (par exemple un écran LCD).

Le capteur 10 est ici un capteur CMOS agencé pour être sensible aux rayonnements de longueurs d'onde appartenant au domaine du visible. Le capteur 10 a une définition de 1200 pixels par 1600 pixels avec un pas de 3 à 5 µm. Le capteur 10 est agencé pour fournir des signaux électriques représentatifs d'images de la scène.

Le capteur 20 est ici un capteur CMOS agencé pour être sensible aux rayonnements de longueurs d'onde appartenant au domaine de l'infrarouge. Le capteur 20 a une définition supérieure à 512 pixels par 640 pixels avec un pas de 15 à 20 µm. Le capteur 20 est agencé pour fournir des signaux électriques représentatifs d'images de la scène.

Le capteur 30 est ici un capteur CMOS agencé pour être sensible aux rayonnements de longueurs d'onde appartenant au domaine de l'infrarouge et du domaine visible. Le capteur 30 a une définition de 1024 pixels par 1280 pixels avec un pas de 5,3 µm. Le capteur 30 est agencé pour fournir des signaux électriques représentatifs d'images de la scène.

Les capteurs 10, 20 et 30 sont harmonisés opto-mécaniquement entre eux de telle manière que le champ C30 se superpose aux champs C10, C20. Devant chacun des capteurs 10, 20, 30 sont montés un groupe optique pour la focalisation des rayons lumineux sur ledit capteur et un hublot de protection (ces éléments ne sont pas représentés sur les figures). Les capteurs 10, 20, 30, sont connus en eux-mêmes et comprennent en outre un circuit électronique d'interface avec le circuit électronique de traitement d'image 60 assurant notamment une mise en forme des signaux pour leur transmission au circuit électronique de traitement d'image 60.

L'émetteur laser 50 est agencé pour émettre des impulsions laser dans une plage prédéterminée de longueurs d'onde. Plus précisément, la longueur d'onde des impulsions laser est de 1064 nm. L'émetteur laser 50 et le capteur 30 sont harmonisés de préférence opto-mécaniquement entre eux.

Le circuit électronique de traitement d'image 60 est une unité informatique, connue en elle-même, comportant un processeur, une mémoire et un module d'entrée/sortie relié aux capteurs 10, 20, 30, et à l'émetteur laser 50 pour assurer :
- la synchronisation de l'émetteur laser 50 avec les capteurs 10, 20, 30 (à noter que cette synchronisation est avantageuse mais pas indispensable) ;
- le traitement des signaux provenant des capteurs 10, 20, 30 pour former des images affichables sur l'afficheur 70 ;
- la sélection du capteur 10 ou du capteur 20 en fonction des conditions d'éclairement de la scène S ;
- l'exécution d'un programme ayant des instructions agencées pour mettre en œuvre le procédé de l'invention.

Un filtre optique 40 est monté devant le capteur 30, entre ledit capteur et le groupe optique. Le filtre 40 est ici réalisé sur une lame de verre ayant des dimensions h et 1 correspondant à celles du capteur 30 et une épaisseur de 3,5 mm + ou - 0,5 mm.

Le filtre 40 est plus particulièrement un filtre à régions d'intérêt (ou filtre ROI) comprenant une première région 41 correspondant à la zone prédéterminée du champ vers laquelle est émis le faisceau laser L, une deuxième région 42 ceinturant la première région 41 et une troisième région 43 entourant la deuxième région 42. Le filtre 40 est agencé pour assurer :
- dans la deuxième région 42, un blocage sensiblement total du flux lumineux provenant de la scène S,
- dans la première région 41, une atténuation du flux lumineux hors de la plage prédéterminée de longueurs d'ondes, et
- dans la troisième région 43, une transmission maximale du flux lumineux.

Le filtre 40 est plus précisément agencé pour assurer
- une opacité aux longueurs d'onde comprises entre 0,3 et 1,2 µm sauf dans une bande passante de 10 nm centrée sur la longueur d'onde 1064 nm dans la première région 41 pour éliminer le fond de la scène et ne conserver que la tache laser ;
- une opacité aux longueurs d'onde comprises entre 0,3 µm et 1.2 µm dans la deuxième région 42 pour bloquer tous les rayons lumineux ;
- une absence de filtrage des longueurs d'ondes comprises entre 0,4 µm et 1,1 µm dans la troisième région 43 pour conserver un maximum de flux lumineux avec une large étendue spectrale et des détails (dynamique, gradient, contraste, inversion...).

Le filtre 40 assure dans la première région 41 une transmission de 85% environ dans la bande passante. La largeur de la bande passante de la première région est mesurée à la moitié de sa valeur maximale (FWHM ou « Full width at half maximum »). Le centrage de la bande passante aura une tolérance de + ou - 2 nm et la largeur de la bande passante aura une tolérance de + ou -2 nm.

La première région 41 du filtre 40 a la forme d'un carré centré sur le centre du capteur 30 et correspond à une première zone du capteur 30 (zone centrale) ayant une définition de 220 pixels par 220 pixels environ.

La deuxième région 42 du filtre 40 s'étend en regard d'une deuxième zone du capteur 30 et a la forme d'un cadre qui est centré sur le centre du capteur 30 et qui a une largeur égale à 95 pixels environ. Le cadre intérieur a une dimension intérieure de 220 pixels pour parfaitement épouser la première région 41. L'épaisseur du filtre prise en compte pour le calcul de la largeur de la deuxième région 42 est 4 mm (compte tenu des cotes de tolérance) qui est le cas le plus favorable au passage des rayons inclinés passant par la troisième région 43 pour atteindre la zone du capteur 30 se trouvant en regard de la première région 41 (on élimine ainsi les risques de diaphonie spectrale ou crosstalk entre la première zone du capteur et la troisième zone du capteur 30).

La première région 41 couvre un champ ayant un angle inférieur à 1° et la deuxième région 42 couvre un champ ayant un angle sensiblement égal à 2,9°.

La troisième région 43 s'étend donc en regard d'une troisième zone du capteur 30 s'étendant depuis les bords externes du capteur 30 jusqu'aux limites externes de la deuxième zone du capteur 30.

Le circuit électronique de traitement 60 est programmé pour mettre en œuvre le procédé d'observation et de désignation de l'invention. Ce procédé comprend les étapes suivantes :
- projeter sur la cible T des impulsions de faisceau laser L pour former la tache lumineuse P sur la cible T ;
- capturer un flux lumineux provenant de la scène S avec l'un des capteurs 10, 20 pour former une première image dite image support ;
- capturer le flux lumineux provenant de la scène S avec le capteur 30 en filtrant le flux lumineux pour former une deuxième image de la scène S dite image laser ;
- superposer les deux images en utilisant la zone de l'image laser correspondant à la troisième région 43 du filtre 40 pour caler spatialement l'image laser par rapport à l'image support ;
- fusionner les deux images pour ne former qu'une seule image combinée. On pourra ne conserver que la zone centrale pour la visualisation de l'image combinée résultant de la fusion.

Les opérations de capture sont synchronisées avec l'émission de l'impulsion laser par le circuit électronique de traitement 60. On notera que le temps d'intégration du capteur 10, 20 sélectionné et du capteur 30 sera déterminé de manière classique en fonctions des conditions de luminosité ambiante dans la scène S. En cas de perte de la synchronisation, on pourra augmenter le temps d'intégration pour être sûr que la tache formée par au moins une impulsion laser soit présente (le temps d'intégration est alors supérieur à la période d'émission des impulsions laser).

De préférence, la capture se fera en utilisant un mode d'acquisition « global shutter » mais un mode d'acquisition « rolling shutter » est également utilisable pour des scènes statiques.

La superposition des images comprend les étapes de :
- établir une première image des gradients de l'image support et une deuxième image des gradients de l'image laser ;
- normaliser les deux images des gradients ;
- détecter des corrélations entre les deux images des gradients pour établir des paramètres de recalage spatial des deux images l'une par rapport à l'autre. Les paramètres de recalage seront déterminés à partir d'une opération de pondération des corrélations pour favoriser les corrélations concernant un bandeau horizontal médian des images. En effet, on considère que cette portion des images est la portion la plus importante puisque c'est là qu'est censée se trouver la cible T.

Une table de passage avec une matrice homographique est ainsi déterminée pour faire correspondre la portion de l'image laser correspondant avec la troisième région 43 et la portion correspondante de l'image support. Pour pouvoir déformer l'image laser, on choisira de préférence un capteur 30 ayant un champ supérieur aux champs C10, C20.

La fusion des images est connue en elle-même. Elle est ici réalisée par la technique dite « Overlay » (calque).

En variante, il est possible d'utiliser une fusion de type « Colormap » (carte de couleur). L'image combinée est alors formée en définissant sur un axe des niveaux de gris représentatifs de la luminance de l'image support et sur l'autre axe des niveaux d'intensité d'une couleur dépendant de celle de l'image laser.

Bien entendu, l'invention n'est pas limitée au mode de réalisation décrit mais englobe toute variante entrant dans le champ de l'invention telle que définie par les revendications.

En particulier, le filtre à régions d'intérêt peut comprendre plus de trois zones et la première zone peut ne pas être au centre du filtre.

Les dimensions des différentes régions du filtre peuvent être différentes de celles décrites. La première région 41 correspondra par exemple à une zone de 172 pixels par 172 pixels.

Les capteurs peuvent être d'un autre type que CMOS, par exemple CCD. Les capteurs peuvent avoir une définition différente de 1024 par 1280 pixels et/ou un pas différent de 5,3 µm.

L'appareil peut ne comprendre qu'un seul capteur pour fournir l'image support : par exemple un capteur d'observation diurne ou un capteur d'observation nocturne.

## Revendications

1. Appareil d'observation et de désignation, comprenant un premier capteur d'image et un deuxième capteur d'image qui sont reliés à un circuit électronique de traitement d'image relié à un afficheur, le premier capteur d'image et le deuxième capteur d'image étant agencés pour avoir des champs se superposant pour fournir respectivement au moins une première image et une deuxième image d'une même scène et l'appareil comprenant un émetteur laser pour émettre dans une zone prédéterminée du champ du deuxième capteur un faisceau laser dans une plage prédéterminée de longueurs d'onde ; un filtre à régions d'intérêt s'étendant devant le deuxième capteur, le filtre à régions d'intérêt comprenant une première région correspondant à la zone prédéterminée du champ, une deuxième région ceinturant la première région et une troisième région entourant la deuxième région, le filtre étant agencé pour assurer, dans la deuxième région, un blocage sensiblement total du flux lumineux provenant de la scène et, dans la première région, une atténuation du flux lumineux hors de la plage prédéterminée de longueurs d'ondes et, dans la troisième région, une transmission maximale du flux lumineux ; le circuit électronique de traitement étant agencé pour superposer les deux images en utilisant la zone de la deuxième image correspondant à la troisième région du filtre pour caler spatialement la deuxième image par rapport à la première image.

2. Appareil selon la revendication 1, dans lequel le faisceau laser a une longueur d'onde théorique prédéterminée et le filtre a dans la première région une bande passante de 10 nm centrée sur la longueur d'onde théorique prédéterminée.

3. Appareil selon la revendication 2, dans lequel le filtre assure dans la première région une transmission de 85% environ dans la bande passante.

4. Appareil selon l'une quelconque des revendications précédentes, dans lequel le deuxième capteur a une définition de 1024 par 1280 pixels.

5. Appareil selon la revendication 4, dans lequel la première région du filtre correspond à une zone de du deuxième capteur ayant une définition de 220 par 220 pixels environ.

6. Appareil selon la revendication 4 ou la revendication 5, dans lequel la deuxième région du filtre a une largeur égale à 95 pixels environ.

7. Appareil selon l'une quelconque des revendications précédentes, dans lequel la première région est positionnée en regard d'une zone centrale du deuxième capteur.

8. Appareil selon l'une quelconque des revendications précédentes, comprenant deux premiers capteurs, un agencé pour des prises de vue diurnes et un agencé pour des prises de vue nocturnes.

9. Procédé d'observation d'une scène et de désignation d'une cible présente dans la scène, comprenant les étapes suivantes :
- projeter sur la cible un faisceau laser dans une plage prédéterminée de longueurs d'onde pour former une tache lumineuse sur la cible ;
- capturer un flux lumineux provenant de la scène avec un premier capteur d'image pour former une première image ;
- capturer le flux lumineux avec un deuxième capteur d'image en filtrant le flux lumineux pour former une deuxième image de la scène, le filtrage étant assuré en définissant une première région de filtrage contenant la tache lumineuse, une deuxième région de filtrage ceinturant la première région et une troisième région de filtrage entourant la deuxième région, le filtrage étant réalisé pour assurer, dans la deuxième région, un blocage sensiblement total du flux lumineux provenant de la scène et, dans la première région, une atténuation du flux lumineux hors de la plage prédéterminée de longueurs d'ondes et, dans la troisième région, une transmission maximale du flux lumineux ;
- superposer les deux images en utilisant la zone de la deuxième image correspondant à la troisième région pour caler spatialement la deuxième image par rapport à la première image pour ne former qu'une seule image.

10. Procédé selon la revendication 9, dans lequel la superposition des images comprend les étapes de :
- établir une première image des gradients et une deuxième image des gradients correspondant respectivement à la première image et à la deuxième image ;
- normaliser les deux images de gradients ;
- détecter des corrélations entre les deux images pour établir des paramètres de recalage spatial des deux images l'une par rapport à l'autre.

11. Procédé selon la revendication 10, comprenant une opération de pondération des corrélations pour favoriser les corrélations concernant un bandeau horizontal médian des images.

## Patentansprüche

1. Gerät zur Beobachtung und zur Bestimmung, umfassend einen ersten Bildsensor und einen zweiten Bildsensor, die mit einer elektronischen Bildverarbeitungsschaltung verbunden sind, die mit einem Anzeigegerät verbunden ist, wobei der erste Bildsensor und der zweite Bildsensor ausgebildet sind, sich überlagernde Felder zu haben, um mindestens ein erstes Bild bzw. ein zweites Bild einer selben Szene zu liefern, und wobei das Gerät einen Lasersender umfasst, um in eine vorbestimmte Zone des Feldes des zweiten Sensors einen Laserstrahl in einem vorbestimmten Wellenlängenbereich zu senden; ein Zielbereich-Filter, das sich vor dem zweiten Sensor erstreckt, wobei das Zielbereich-Filter einen ersten Bereich umfasst, der der vorbestimmten Zone des Feldes entspricht, einen zweiten Bereich, der den ersten Bereich umgibt, und einen dritten Bereich, der den zweiten Bereich umgibt, wobei das Filter ausgebildet ist, in dem zweiten Bereich eine im Wesentlichen vollständige Blockierung des aus der Szene stammenden Lichtflusses und in dem ersten Bereich eine Dämpfung des Lichtflusses außerhalb des vorbestimmten Wellenlängenbereichs und in dem dritten Bereich eine maximale Übertragung des Lichtflusses sicherzustellen; wobei die elektronische Verarbeitungsschaltung ausgebildet ist, die beiden Bilder unter Verwendung der Zone des zweiten Bildes, die dem dritten Bereich des Filters entspricht, übereinander zu legen, um das zweite Bild in Bezug auf das erste Bild räumlich zu registrieren.

2. Gerät nach Anspruch 1, bei dem der Laserstrahl eine vorbestimmte theoretische Wellenlänge hat und das Filter in dem ersten Bereich einen Durchlassband von 10 nm hat, der auf die vorbestimmte theoretische Wellenlänge zentriert ist.

3. Gerät nach Anspruch 2, bei dem das Filter in dem ersten Bereich eine Übertragung von ungefähr 85% in dem Durchlassband sicherstellt.

4. Gerät nach einem der vorhergehenden Ansprüche, bei dem der zweite Sensor eine Auflösung von 1024 mal 1280 Pixel hat.

5. Gerät nach Anspruch 4, bei dem der erste Bereich des Filters einer Zone des zweiten Sensors entspricht, die eine Auflösung von ungefähr 220 mal 220 Pixel hat.

6. Gerät nach Anspruch 4 oder Anspruch 5, bei dem der zweite Bereich des Filters eine Breite gleich ungefähr 95 Pixel hat.

7. Gerät nach einem der vorhergehenden Ansprüche, bei dem der erste Bereich gegenüber einer zentralen Zone des zweiten Sensors positioniert ist.

8. Gerät nach einem der vorhergehenden Ansprüche, umfassend zwei erste Sensoren, von denen einer für Tagesaufnahmen ausgebildet ist und einer für Nachtaufnahmen ausgebildet ist.

9. Verfahren zur Beobachtung einer Szene und zur Bestimmung eines in der Szene vorhandenen Ziels, umfassend die folgenden Schritte:
- Projizieren eines Laserstrahls in einem vorbestimmten Wellenlängenbereich auf das Ziel, um einen Lichtfleck auf dem Ziel zu bilden;
- Erfassen eines aus der Szene stammenden Lichtflusses mit einem ersten Bildsensor, um ein erstes Bild zu bilden;
- Erfassen des Lichtflusses mit einem zweiten Bildsensor, indem der Lichtfluss gefiltert wird, um ein zweites Bild der Szene zu bilden, wobei die Filterung sichergestellt wird, indem ein erster Filterbereich, der den Lichtfleck enthält, ein zweiter Filterbereich, der den ersten Bereich umgibt, und ein dritter Filterbereich, der den zweiten Bereich umgibt, definiert werden, wobei die Filterung erfolgt, um in dem zweiten Bereich eine im Wesentlichen vollständige Blockierung des aus der Szene stammenden Lichtflusses und in dem ersten Bereich eine Dämpfung des Lichtflusses außerhalb des vorbestimmten Wellenlängenbereichs und in dem dritten Bereich eine maximale Übertragung des Lichtflusses sicherzustellen;
- Überlagern der beiden Bilder, indem die Zone des zweiten Bildes, die dem dritten Bereich entspricht, zur räumlichen Registrierung des zweiten Bildes in Bezug auf das erste Bild verwendet wird, um nur ein einziges Bild zu bilden.

10. Verfahren nach Anspruch 9, bei dem die Überlagerung der Bilder die Schritte umfasst:
- Erstellen eines ersten Bildes von Gradienten und eines zweiten Bildes von Gradienten, die dem ersten Bild bzw. dem zweiten Bild entsprechen;
- Normieren der beiden Gradientenbilder;
- Erfassen von Korrelationen zwischen den beiden Bildern, um Parameter zur räumlichen Registrierung der beiden Bilder zueinander zu erstellen.

11. Verfahren nach Anspruch 10, umfassend einen Vorgang der Gewichtung der Korrelationen, um die Korrelationen zu begünstigen, die ein horizontales mittleres Band der Bilder betreffen.

## Claims

1. Observation and designation apparatus comprising a first image sensor and a second image sensor that are connected to an electronic image processor circuit connected to a display, the first image sensor and the second image sensor being arranged to provide fields that are superposed in order to supply respectively at least a first image and a second image of the same scene, and the appliance further comprising a laser emitter for emitting a laser beam lying in a predetermined range of wavelengths into a predetermined zone of the field of the second sensor; a region-of-interest filter extending in front of the second sensor, the region-of-interest filter having a first region corresponding to the predetermined zone of the field, a second region surrounding the first region, and a third region surrounding the second region, the filter being arranged, in the second region to block substantially all of the light flux coming from the scene, in the first region to attenuate the light flux lying outside the predetermined range of wavelengths, and in the third region to transmit a maximum amount of the light flux; the electronic processor circuit being arranged to superpose the two images by using the zone of the second image that corresponds to the third region of the filter in order to register the second image spatially relative to the first image.

2. Apparatus according to claim 1, wherein the laser beam has a predetermined theoretical wavelength and in the first region the filter has a passband of 10 nm centered on the predetermined theoretical wavelength.

3. Apparatus according to claim 2, wherein in the first region, the filter provides transmission in the passband of 85% approximately.

4. Apparatus according to any preceding claim, wherein the second sensor has definition of 1024 by 1280 pixels.

5. Apparatus according to claim 4, wherein the first region of the filter corresponds to a zone of the second sensor having definition of 220 by 220 pixels approximately.

6. Apparatus according to claim 4 or claim 5, wherein the second region of the filter is of width equal to 95 pixels approximately.

7. Apparatus according to any preceding claim, wherein the first region is positioned facing a central zone of the second sensor.

8. Apparatus according to any preceding claim, having two first sensors, one arranged for taking daytime images and the other arranged for taking nighttime images.

9. A method of observing a scene and designating a target present in the scene, the method comprising the following steps:
• projecting a laser beam in a predetermined range of wavelengths onto the target in order to form a light spot on the target;
• using a first image sensor to capture light flux coming from the scene in order to form a first image;
• using a second image sensor to capture the light flux while filtering the light flux in order to form a second image of the scene, the filtering being performed by defining a first filter region containing the light spot, a second filter region surrounding the first region, and a third filter region surrounding the second region, the filtering being performed in the second region to block substantially all of the light flux coming from the scene, in the first region to attenuate the light flux outside the predetermined range of wavelengths, and in the third region to transmit a maximum amount of the light flux; and
• superposing the two images by using the zone of the second image that corresponds to the third region to register the second image spatially relative to the first image so as to form a single image.

10. A method according to claim 9, wherein superposing the images comprises the steps of:
• establishing a first image of the gradients and a second image of the gradients corresponding respectively to the first image and to the second image;
• normalizing the two gradient images; and
• detecting the correlations between the two images in order to establish registration parameters for spatially registering the two images relative to each other.

11. A method according to claim 10, including an operation of weighting the correlations in order to favor correlations concerning a horizontal middle band of the images.
